# EUROPEAN PATENT SPECIFICATION

(11) **EP 3 678 285 B1**
(45) Date of publication and mention of the grant of the patent: **02.11.2022**
(21) Application number: 18865411.5
(22) Date of filing: 05.10.2018
(51) Int. Cl.: H02K 3/34, H02K 3/52, H02K 1/12, H02K 1/18, H02K 3/46

(54) **STATOR, MOTOR, AND COMPRESSOR**
STATOR, MOTOR UND VERDICHTER
STATOR, MOTEUR ET COMPRESSEUR

(30) Priority: 12.10.2017 JP 2017198669
(43) Date of publication of application: 08.07.2020
(73) Proprietor: Daikin Industries, Ltd., Osaka-shi, Osaka 530-8323 (JP)
(72) Inventor: SUMITOMO, Hisato, Osaka-shi Osaka 530-8323 (JP); HORI, Takanori, Osaka-shi Osaka 530-8323 (JP); NISHIJIMA, Kiyotaka, Osaka-shi Osaka 530-8323 (JP)
(74) Representative: Goddar, Heinz J.
(86) International application number: PCT/JP2018/037350
(87) International publication number: WO 2019/073921

(56) References cited:
- EP-A1- 3 128 649
- WO-A1-2011/101986
- WO-A1-2016/199203
- WO-A1-2017/134740
- JP-A- 2007 043 842
- JP-A- 2007 043 842
- JP-A- 2008 167 516
- JP-A- 2009 089 584
- JP-A- 2015 233 389
- JP-A- 2015 233 389
- US-A1- 2007 090 717
- US-A1- 2015 249 373

## Description

### TECHNICAL FIELD

The present invention relates to stators, motors, and compressors.

### BACKGROUND ART

Examples of conventional stators include a stator including a stator core having an annular back yoke and a plurality of teeth arranged radially inside of the back yoke, and insulators between which the stator core is sandwiched from both sides in an axial direction, in which projections protruding from outer peripheral sides of the insulators toward the stator core are engaged with fitting grooves provided on outer peripheral surfaces of upper and lower end portions of the back yoke of the stator core to fix the insulators to both end portions of the stator core (see, for example, Patent Literature 1). Prior art documents JP2008167516A, WO2017/134740A1 and EP3128649A1 also disclose similar conventional stators.

### CITATION LIST

### PATENT LITERATURE

Patent Literature 1: JP 2014-233123 A

### SUMMARY OF INVENTION

### TECHNICAL PROBLEMS

In the conventional stator described above, the stator core is made of a laminate of a plurality of electrical steel sheets, and, in order to fix the plurality of electrical steel sheets together, adjacent electrical steel sheets are fitted to each other by crimping.

For such a stator in which the plurality of electrical steel sheets of the stator core are fixed to each other by crimping, when crimps are provided at positions on the outer peripheral side of the back yoke that are less affected by magnetic flux, and the fitting grooves are provided on outer peripheral portions of the back yoke that are radially outward of the crimps, a thickness from the crimp of the stator core to the outer periphery of the back yoke is reduced by provision of the fitting grooves, which in turn makes the fitting grooves more prone to deformation due to the crimps. The deformation of the fitting grooves of the stator core makes it difficult to fit the projections of the insulators into the fitting grooves, and the fixing of the insulators to the stator core becomes unstable. For this reason, the above stator would suffer a problem that the insulators are displaced or deformed due to winding tension during coil winding operation.

Hence, the present invention provides a stator that allows a projection of an insulator to be fitted into a fitting groove or fitting hole of a stator core without being affected by core deformation due to crimp and makes the insulator less prone to displacement or deformation due to, for example, winding tension during winding.

The present invention further provides a motor including the stator.

The present invention further provides a compressor including the motor.

### SOLUTION TO PROBLEMS

A stator according to an aspect of the present invention includes a stator core including a back yoke having an annular shape and a plurality of teeth protruding radially inward of the back yoke and arranged at intervals in a circumferential direction, and insulators between which the stator core is sandwiched from both sides in an axial direction. In such a stator, at least two fitting grooves are provided on an outer peripheral side of the back yoke, the at least two fitting grooves extending along the axial direction and being arranged away from, in the circumferential direction, a position of a crimp that joins laminated steel sheets of the back yoke so as to put the position of the crimp between the at least two fitting grooves, and at least two projections are provided on outer peripheral sides of the insulators, the at least two projections being fitted into the at least two fitting grooves of the back yoke.

According to the above structure, the at least two fitting grooves are provided on the outer peripheral side of the back yoke, extending along the axial direction and arranged away from, in the circumferential direction, the position of the crimp that joins the laminated steel sheets of the back yoke, so as to put the position of the crimp between the two fitting grooves and, and the at least two projections provided on the outer peripheral sides of the insulators are fitted into the at least two fitting grooves of the back yoke. Accordingly, since no fitting groove is provided on an outer peripheral portion of the back yoke on the outer side in the radial direction of the crimp, and the crimp is located between and distanced from the fitting grooves in the circumferential direction, it is possible to maintain a thickness in the radial direction from the crimp of the stator core to the outer peripheral portion, which in turn makes a peripheral portion of the back yoke including the crimp less prone to deformation and further makes the fitting grooves less prone to deformation. Since the at least two projections of the insulators are fitted into the at least two fitting grooves of the stator core without being affected by possible deformation of the stator core due to the crimping, stability of the insulators fixed to the stator core increases, which in turn makes the insulators less prone to displacement or deformation due to, for example, winding tension during coil winding operation.

In the stator according an embodiment, the fitting grooves on the outer peripheral side of the back yoke are provided continuously extending along the axial direction between both end surfaces of the back yoke, and a portion of each of the fitting grooves into which a corresponding one of the projections of the insulators is fitted is greater in radial depth than other portions of the fitting grooves.

According to the above embodiment, the fitting grooves on the outer peripheral side of the back yoke are provided continuously extending along the axial direction between both the end surfaces of the back yoke, and, of the fitting grooves, portions into which the projections of the insulators are fitted are greater in radial depth than the other portions. This arrangement provides a ridge-shaped raised portion, at which the laminated steel plates are weldable, between the fitting grooves provided continuously extending along the axial direction, and also makes it possible to increase strength of engagement of the projections of the insulators with the fitting grooves on the outer peripheral side of the back yoke. Here, welding the laminated steel sheet of the ridge-shaped raised portion formed between the fitting grooves of the back yoke increases the rigidity of the laminated steel sheets of the stator core.

Further, in the stator according to an embodiment, the crimp of the back yoke is located on a center line, extending in a radial direction, of a corresponding tooth.

According to the above embodiment, providing a crimp of the back yoke on the center line, extending in the radial direction, of a corresponding tooth causes the crimp to be disposed at a position on the outer peripheral side of the back yoke that is less affected by magnetic flux. The fitting grooves are arranged away from, in the circumferential direction, the position of the crimp so as to put the position of the crimp between the fitting grooves, which means that the fitting grooves are also arranged at positions less affected by magnetic flux. This arrangement suppresses deterioration in motor performance.

Further, in the stator according to an embodiment, the fitting grooves on the outer peripheral side of the back yoke are each provided in an area where a core cut of the back yoke is formed.

According to the above embodiment, each of the fitting grooves is provided on the outer peripheral side of the back yoke in an area where the core cut of the back yoke is formed. Thus, when the stator is fixed into the hermetic container by shrink fitting or the like, portions where the projections of the insulators are fitted into the fitting grooves of the stator core are prevented from receiving force from the inner peripheral surface of the hermetic container and being deformed, which makes the insulators fixed to the stator core more stable.

Further, in the stator according to an embodiment, the fitting grooves on the outer peripheral side of the back yoke are provided continuously extending along the axial direction between both the end surfaces of the back yoke to form a ridge-shaped raised portion between the fitting grooves on the outer peripheral side of the back yoke, the laminated steel sheets at the ridge-shaped raised portions being welded together.

According to the above embodiment, providing the fitting grooves on the outer peripheral side of the back yoke continuously extending along the axial direction between both the end surfaces of the back yoke to form the ridge-shaped raised portions between the fitting grooves on the outer peripheral side of the back yoke and welding the ridge-shaped raised portions result in an increase in rigidity of the laminated steel sheets of the stator core. This makes it possible to prevent, when the stator is fixed into the hermetic container by shrink fitting or the like, the stator core from being deformed, suppress deterioration in flatness of both the end surfaces of the stator core, and suppress deterioration in motor performance and reduce noise.

Further, a stator according to an aspect of the present invention includes a stator core including a back yoke having an annular shape and a plurality of teeth protruding radially inward of the back yoke and arranged at intervals in a circumferential direction, and insulators between which the stator core is sandwiched from both sides in an axial direction. In such a stator, at least two fitting holes are provided on an outer peripheral side of the back yoke, the at least two fitting holes extending along the axial direction and being arranged away from, in the circumferential direction, a position of a crimp that joins laminated steel sheets of the back yoke, so as to put the position of the crimp between the at least two fitting holes, and at least two projections are provided on outer peripheral sides of the insulators, the at least two projections being fitted into the at least two fitting holes of the back yoke.

According to the above structure, the at least two fitting holes are provided on the outer peripheral side of the back yoke, and extending along the axial direction and arranged away from, in the circumferential direction, the position of the crimp that joins the laminated steel sheets of the back yoke, to put the position of the crimp between the at least two fitting holes, and the at least two projections provided on the outer peripheral sides of the insulators are fitted into the at least two fitting holes of the back yoke. Accordingly, since no fitting groove is provided on an outer peripheral portion of the back yoke on the outer side in the radial direction of the crimp, and the crimp is located between and distanced from the fitting holes in the circumferential direction, it is possible to maintain a thickness in the radial direction from the crimp of the stator core to the outer peripheral portion, which in turn makes a peripheral portion of the back yoke including the crimp less prone to deformation and further makes the fitting holes less prone to deformation. Since the at least two projections of the insulators are fitted into the at least two fitting holes of the stator core without being affected by possible deformation of the stator core due to the crimping, stability of the insulators fixed to the stator core increases, which in turn makes the insulators less prone to displacement or deformation due to, for example, winding tension during coil winding operation.

Further, a motor according to an aspect of the present invention includes any one of the above-described stators and a rotor disposed radially inside of the stator.

The above structure includes the stator, which allows the projections of the insulators to be fitted into the fitting grooves or fitting holes of the stator core without being affected by core deformation due to the crimp and which can suppress displacement or deformation of the insulators due to, for example, winding tension during coil winding operation, and the rotor disposed radially inside of the stator. This makes it possible to suppress deterioration in motor performance and reduce noise.

Further, a compressor according to an aspect of the present invention includes a hermetic container, a compression mechanism part disposed in the hermetic container, and the above-described motor disposed in the hermetic container and configured to drive the compression mechanism part.

According to the above structure, the motor is disposed in the hermetic container and drives the compression mechanism part, which makes it possible to suppress deterioration in performance and reduce noise.

### ADVANTAGEOUS EFFECTS OF INVENTION

As is apparent from the above, according to the present invention, a stator that allows the projections of the insulators to be fitted into the fitting grooves or fitting holes of the stator core without being affected by core deformation due to crimp and can suppress displacement or deformation of the insulators due to, for example, winding tension during coil winding operation, a motor including the stator, and a compressor including the motor can be provided.

### BRIEF DESCRIPTION OF DRAWINGS

FIG. 1 is a longitudinal cross-sectional view of a compressor according to a first embodiment of the present invention.
FIG. 2 is a perspective view of a stator of a motor that drives the compressor.
FIG. 3 is a perspective view of a stator core of the stator.
FIG. 4 is a perspective view of an upper insulator of the stator as viewed from above.
FIG. 5 is a perspective view of the upper insulator as viewed from below.
FIG. 6A is a top view of the stator core.
FIG. 6B is an enlarged top view of a part of the stator core.
FIG. 6C is an enlarged top view of a part of the stator core.
FIG. 7 is a longitudinal cross-sectional view of the stator core.
FIG. 8 is a top view of the upper insulator.
FIG. 9 is a bottom view of the upper insulator.
FIG. 10 is a developed view of the upper insulator.
FIG. 11 is a bottom view of a lower insulator of the stator.
FIG. 12 is a top view of the lower insulator.
FIG. 13 is a developed view of the lower insulator.
FIG. 14 is a perspective view of a stator core of a stator according to a fourth embodiment of the present invention.
FIG. 15 is a perspective view of an upper insulator of the stator as viewed from above.
FIG. 16A is a top view of the stator core.
FIG. 16B is an enlarged top view of a part of the stator core.
FIG. 16C is an enlarged top view of a part of the stator core.

### DESCRIPTION OF EMBODIMENTS

Hereinafter, a stator, a motor, and a compressor according to the present invention will be described in detail with reference to the illustrated embodiments.

### [First embodiment]

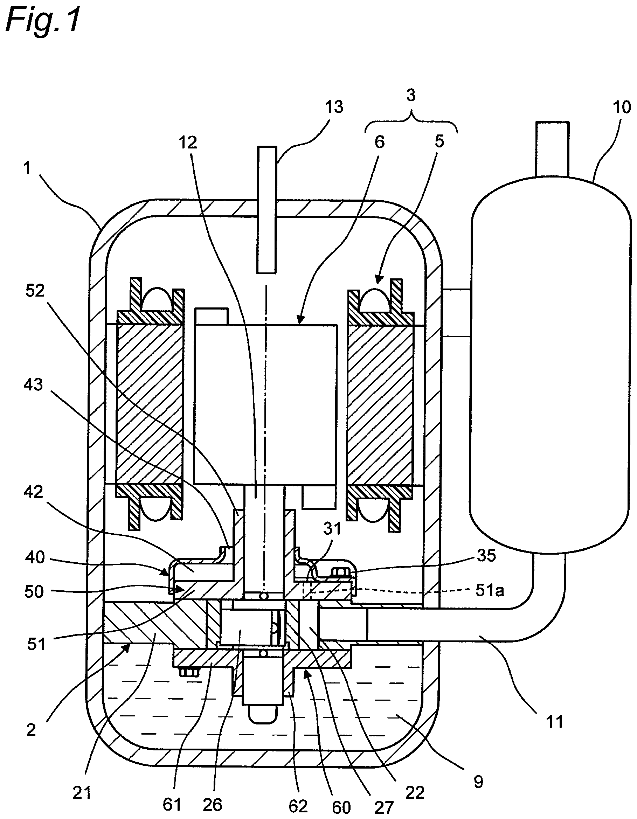

FIG. 1 is a longitudinal cross-sectional view of a compressor according to a first embodiment of the present invention.

As shown in FIG. 1, the compressor according to the first embodiment includes a hermetic container 1, a compression mechanism part 2 disposed in the hermetic container 1, and a motor 3 disposed in the hermetic container 1 and configured to drive the compression mechanism part 2 via a shaft 12.

The compressor is a so-called vertical high-pressure dome-type rotary compressor and has the compression mechanism part 2 disposed on a lower side of the hermetic container 1 and the motor 3 disposed on an upper side of the compression mechanism part 2. The compression mechanism part 2 is driven by a rotor 6 of the motor 3 via the shaft 12.

The compression mechanism part 2 sucks refrigerant gas from an accumulator 10 through a suction pipe 11. This refrigerant gas is obtained by controlling a condenser, an expansion mechanism, and an evaporator (not shown), which, together with the compressor, constitute an air conditioner that is an example of a refrigeration system.

The compressor is configured to discharge compressed high-temperature and high-pressure refrigerant gas from the compression mechanism part 2 to fill the hermetic container 1 with the refrigerant gas and to cause the refrigerant gas to pass through a gap between a stator 5 and the rotor 6 of the motor 3 to cool the motor 3, and then discharge the refrigerant gas to the outside from a discharge pipe 13 provided on an upper side of the motor 3. Formed below a high-pressure area in the hermetic container 1 is an oil sump 9 in which a lubricating oil is stored.

The compression mechanism part 2 includes a cylinder 21 mounted to an inner surface of the hermetic container 1, an upper-end plate member 50 and a lower-end plate member 60 mounted to upper and lower opening edges of the cylinder 21, respectively. The cylinder 21, the upper-end plate member 50, and the lower-end plate member 60 define a cylinder chamber 22.

The upper-end plate member 50 has a disk-shaped main body 51 and a boss 52 provided at a center of the main body 51 and extending upward. The main body 51 and the boss 52 have the shaft 12 inserted therethrough.

The main body 51 has a discharge port 51a communicating with the cylinder chamber 22. A discharge valve 31 that opens and closes the discharge port 51a is mounted to the main body 51 on the opposite side of the main body 51 from the cylinder 21.

A cup-shaped muffler cover 40 is mounted to the opposite side of the main body 51 from the cylinder 21 so as to cover the discharge valve 31. This muffler cover 40 has the boss 52 inserted therethrough and is fixed to the main body 51 with a bolt 35 or the like. The muffler cover 40 and the upper-end plate member 50 define a muffler chamber 42. The muffler chamber 42 and the cylinder chamber 22 communicate with each other through the discharge port 51a. Further, the muffler cover 40 has a hole 43 allowing the muffler chamber 42 to communicate with an outside of the muffler cover 40.

Further, the lower-end plate member 60 has a disk-shaped main body 61 and a boss 62 provided at a center of the main body 61 and extending downward. The main body 61 and the boss 62 have the shaft 12 inserted therethrough.

Provided on a supported end side of the shaft 12 is an eccentric pin 26 that is located in the cylinder chamber 22 of the compression mechanism part 2. The eccentric pin 26 is fitted to a roller 27. This roller 27 is disposed revolvable in the cylinder chamber 22, and revolving motion of the roller 27 causes a compression action.

The motor 3 of the compressor is an inner-rotor-type motor. The motor 3 mounted into the hermetic container 1 has the rotor 6, and the stator 5 disposed radially outside of the rotor 6 with an air gap provided between the rotor 6 and the stator 5.

The rotor 6 has a columnar rotor core (not shown), and six plate-shaped permanent magnets (not shown) embedded in the rotor core at intervals in a circumferential direction. The shaft 12 is mounted into a center hole of the rotor core.

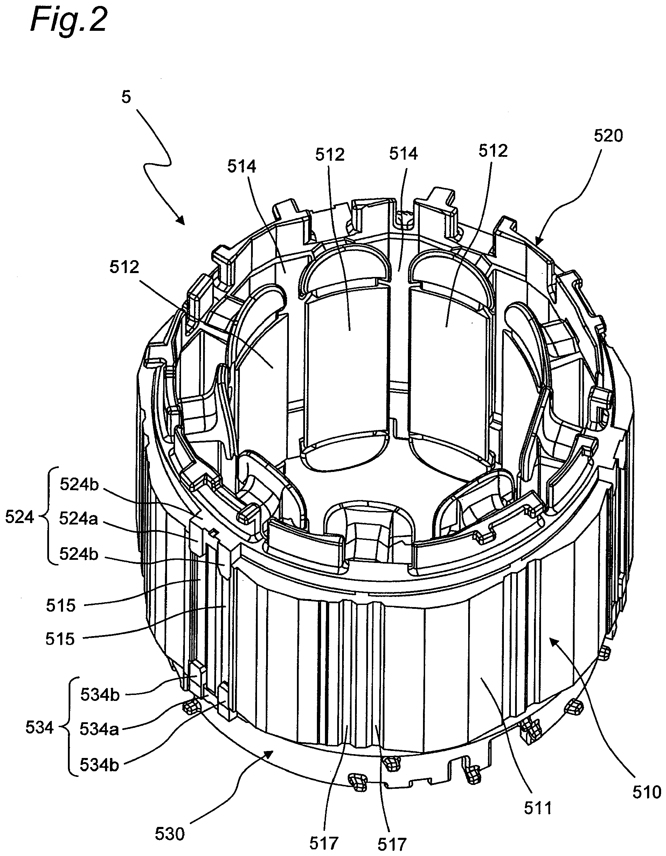

FIG. 2 is a perspective view of the stator 5. For easy understanding of the figure, no coil is shown in FIG. 2.

As shown in FIG. 2, the stator 5 has a stator core 510, an upper insulator 520 mounted to an upper end surface in the axial direction of the stator core 510, a lower insulator 530 mounted to a lower end surface in the axial direction of the stator core 510, and a coil (not shown) wound around an assembly of the stator core 510, the upper insulator 520, and the lower insulator 530.

As a material of the upper insulator 520 and the lower insulator 530, an insulating resin such as a liquid crystalline polymer (LCP), polybutylene terephthalate (PBT), or polyphenylene sulfide (PPS) is used.

Note that the motor 3 used in the compressor is exposed to a refrigerant and a refrigerating machine oil; therefore, the material used for the upper insulator 520 and the lower insulator 530 may also be less prone to deterioration in, for example, insulation against the refrigerant and the refrigerating machine oil.

The stator core 510 has a back yoke 511 having an annular shape, and a plurality of teeth 512 protruding radially inward from an inner peripheral surface of the back yoke 511. In each of slots 514 that are spaces between the teeth 512 adjacent to each other in the circumferential direction of the stator core 510, a slot cell (not shown) is provided extending along the teeth 512 and the inner peripheral surface of the back yoke 511 to insulate the stator core 510 from the coil. The slot cells are made of a sheet-like resin material such as a resin insulating film or a resin molded product (for example, polyethylene terephthalate (PET)).

Herein, the slot 514 is an area between the teeth 512 adjacent to each other, through which the coil is wound. The coil (not shown) is wound around each of the teeth 512, i.e., a so-called concentrated winding, rather than being wound around a plurality of teeth 512.

The motor 3 has so-called 6 poles and 9 slots. An electromagnetic force produced in the stator 5 through application of a current to the coil wound around the stator core 510 rotates the rotor 6 (shown in FIG. 1) together with the shaft 12 (shown in FIG. 1). Note that the number of poles of the motor 3 and the number of slots of the motor 3 are not limited to those described above.

Note that, in FIG. 2, 515 denotes a fitting groove provided on an outer periphery of the back yoke 511, 524 denotes a fitting claw of the upper insulator 520, 524a denotes a raised portion of the fitting claw 524, 524b denotes a projection of the fitting claw 524, 534 denotes a fitting claw of the lower insulator 530, 534a denotes a raised portion of the fitting claw 534, and 534b denotes a projection of the fitting claw 534.

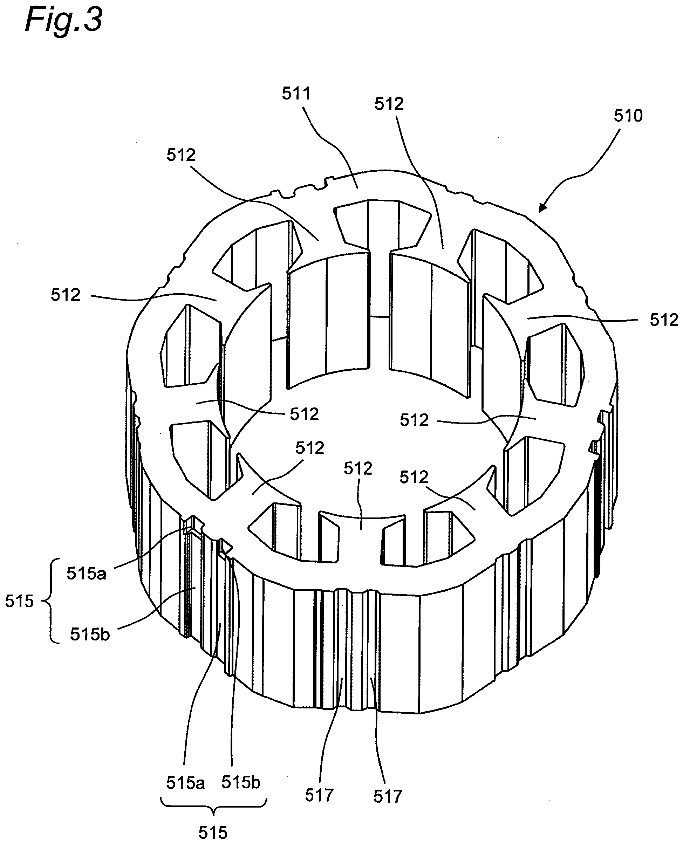

FIG. 3 is a perspective view of the stator core 510.

The stator core 510 is made of a laminate of a plurality electrical steel sheets (laminated steel sheets) and is fitted into the hermetic container 1 (shown in FIG. 1) by shrink fitting or the like. As shown in FIG. 3, the stator core 510 has the back yoke 511 having an annular shape and nine teeth 512 protruding radially inward from the inner peripheral surface of the back yoke 511 and arranged at equal intervals (intervals of 40 degrees) in the circumferential direction.

Note that the stator core 510 according to the first embodiment has a structure where the back yoke 511 having an annular shape and the nine teeth 512 are combined into a single body, or one piece; however, a structure where the stator core having the back yoke 511 having an annular shape and the nine teeth 512 is divided into pieces may be employed.

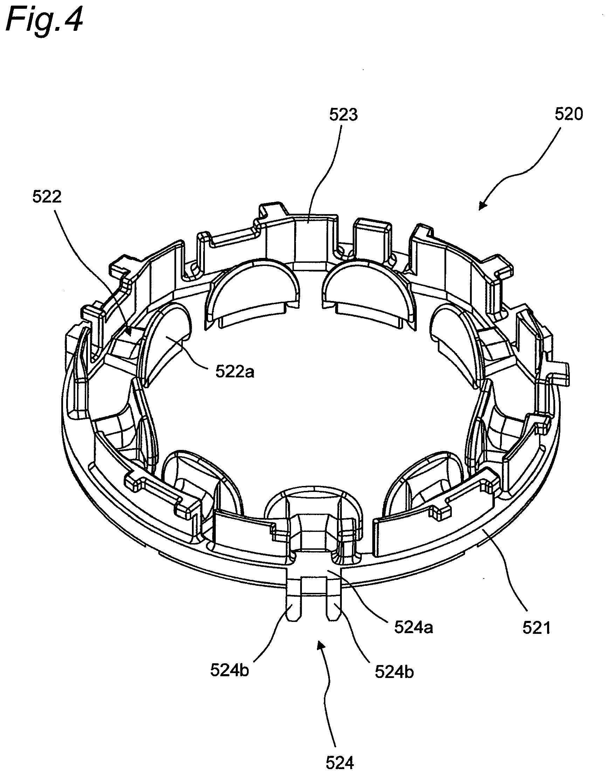

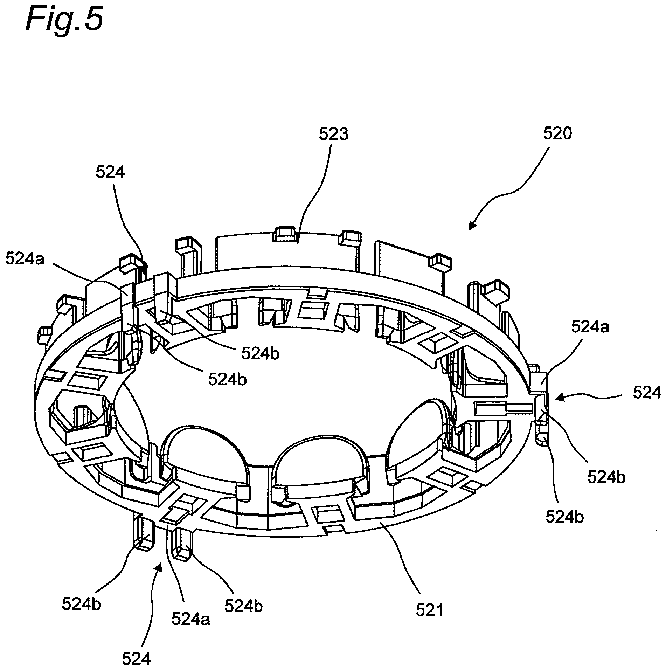

FIG. 4 is a perspective view of the upper insulator 520 as viewed from above, and FIG. 5 is a perspective view of the upper insulator 520 as viewed from below.

As shown in FIG. 4 and FIG. 5, the upper insulator 520 has an annular base 521, nine protrusions 522 protruding radially inward from an inner peripheral side of the annular base 521 and arranged at equal intervals (intervals of 40 degrees) in the circumferential direction, and a wall 523 erected in an approximately annular shape on an upper end surface in the axial direction of the annular base 521. Provided on a distal end side of each of the protrusions 522 is a flange 522a for preventing the coil from coming off.

Further, provided on an outer periphery of the annular base 521 of the upper insulator 520 are three fitting claws 524. Each of the fitting claws 524 has a raised portion 524a protruding radially outward from the outer periphery of the annular base 521, and two projections 524b extending downward in the axial direction from a distal end side of the raised portion 524a and arranged at a predetermined interval in the circumferential direction.

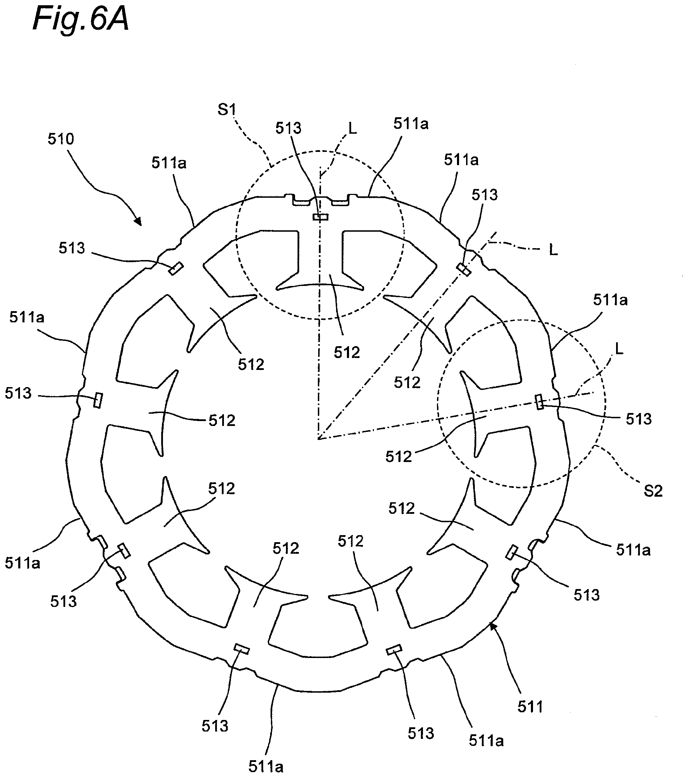

FIG. 6A is a top view of the stator core 510.

As shown in FIG. 6A, the stator core 510 has core cuts 511a provided in nine areas corresponding to the teeth 512 on the outer peripheral surface of the back yoke 511. The core cuts 511a of the stator core 510 do not come into contact with the inner peripheral surface of the hermetic container 1 (shown in FIG. 1).

Provided on the outer peripheral side of the back yoke 511 having an annular shape of the stator core 510 and on center lines L extending in the radial direction of each of the teeth 512 are crimps 513 that fasten the plurality of electrical steel sheets of the stator core 510 together.

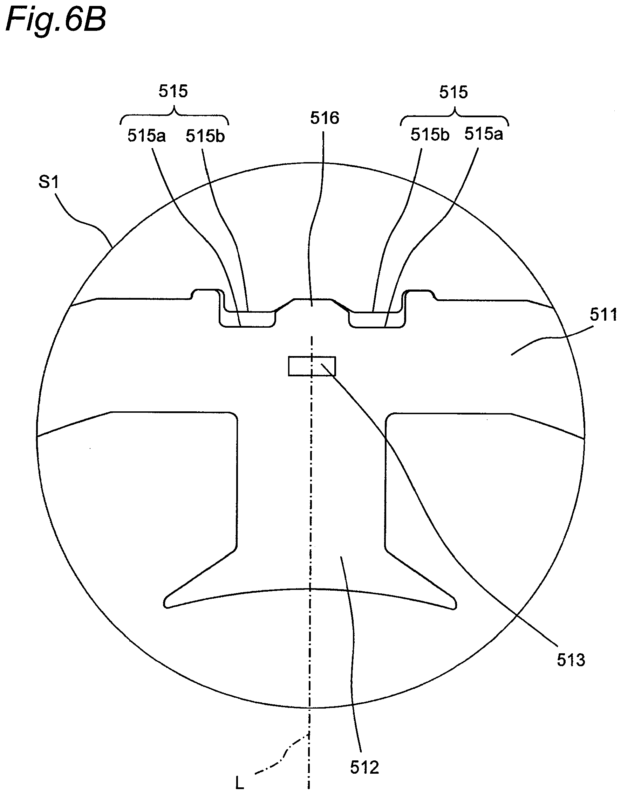

FIG. 6B is an enlarged top view of a part (area S1 shown in FIG. 6A) of the stator core 510.

Provided on the outer peripheral side of the back yoke 511 are two fitting grooves 515 extending in the axial direction and arranged away from, in the circumferential direction, a position of the crimp 513 on the center line L, extending in the radial direction, of each tooth 512 in such a manner as to put the position of the crimp 513 between the two fitting grooves 515.

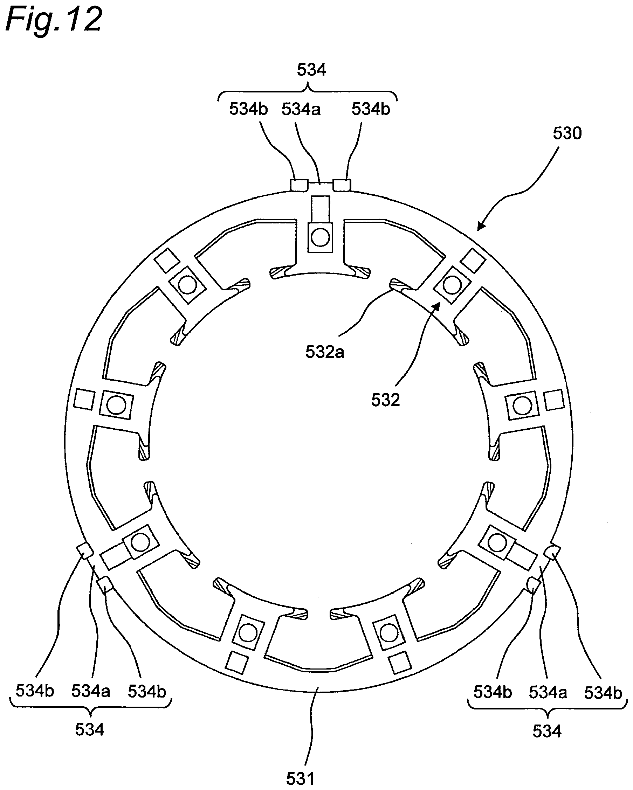

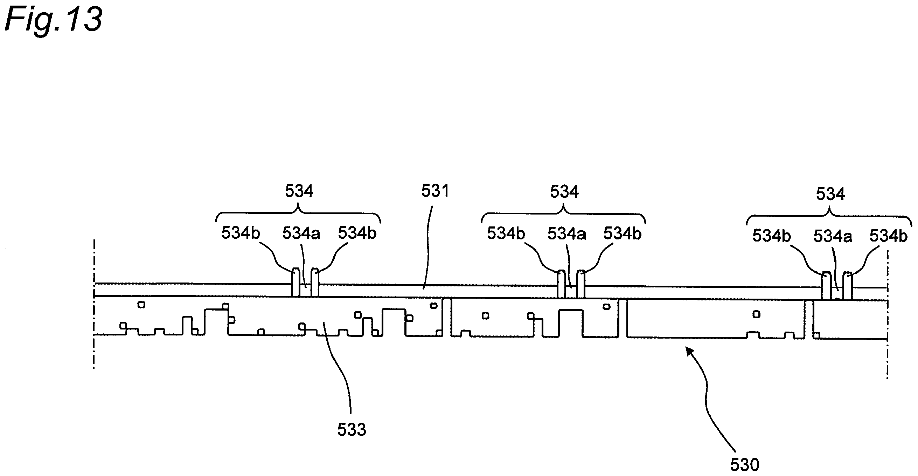

The two fitting grooves 515 are provided continuously extending along the axial direction between both end surfaces of the back yoke 511. Each of the fitting grooves 515 has, on an upper end side thereof, a first groove 515a into which a projection 524b (shown in FIG. 4, FIG. 5, FIG. 9, and FIG. 10) of the upper insulator 520 is fitted and, on a lower end side thereof, a first groove 515a into which a projection 534b (shown in FIG. 12 and FIG. 13) of the lower insulator 530 is fitted. Further, the fitting grooves 515 each have a second groove 515b connecting between the first groove 515a on the upper end side and the first groove 515a on the lower end side.

The first groove 515a on the upper end side and the first groove 515a on the lower end side of each of the fitting grooves 515 are greater in radial depth than the second groove 515b (see FIG. 3).

In the area S1 of the stator core 510, the two projections 524b of the upper insulator 520 are fitted into the respective first grooves 515a on the upper end side of the two fitting grooves 515, and the two projections 534b of the lower insulator 530 are fitted into the respective first grooves 515a on the lower end side of the two fitting grooves 515. Three sets of the two fitting grooves 515 are arranged on the stator core 510 at intervals of 120 degrees in the circumferential direction.

Since the fitting grooves 515 on the outer periphery of the back yoke 511 of the stator core 510 are provided continuously extending in the axial direction between both end surfaces of the back yoke 511, ridge-shaped raised portions 516 are formed extending in the axial direction between the two fitting grooves 515 on the outer peripheral side of the back yoke 511. The laminated steel sheets at the ridge-shaped raised portions 516 of the stator core 510 are welded together.

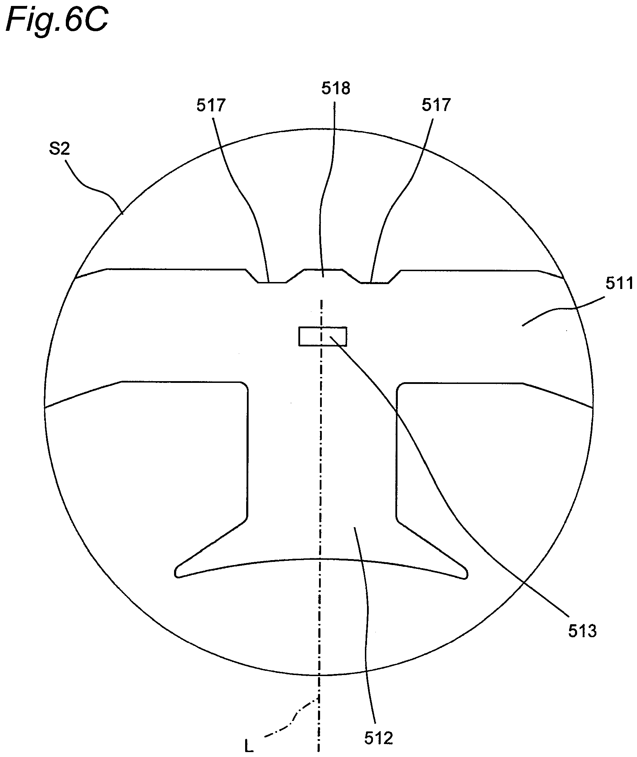

FIG. 6C is an enlarged top view of a part (area S2 shown in FIG. 6A) of the stator core 510.

Provided on the outer peripheral side of the back yoke 511 are two grooves 517 extending in the axial direction and arranged away from, in the circumferential direction, the position of the crimp 513 on the center line L, extending in the radial direction, of each teeth 512 to put the position of the crimp 513 between the two grooves 517 (see FIG. 2 and FIG. 3).

The areas S2 of the stator core 510 are, as shown in FIG. 6A, arranged at intervals of 40 degrees in the circumferential direction between the areas S1 of the stator core 510.

As shown in FIG. 6C, since the grooves 517 on the outer peripheral side of the back yoke 511 are provided continuously extending in the axial direction between both end surfaces of the back yoke 511, ridge-shaped raised portions 518 each are formed extending in the axial direction between two grooves 517 on the outer peripheral side of the back yoke 511. The grooves 517 are each approximately identical in radial depth to the second groove 515b of each of the fitting grooves 515. The laminated steel sheets at the ridge-shaped raised portions 518 of the stator core 510 are welded together.

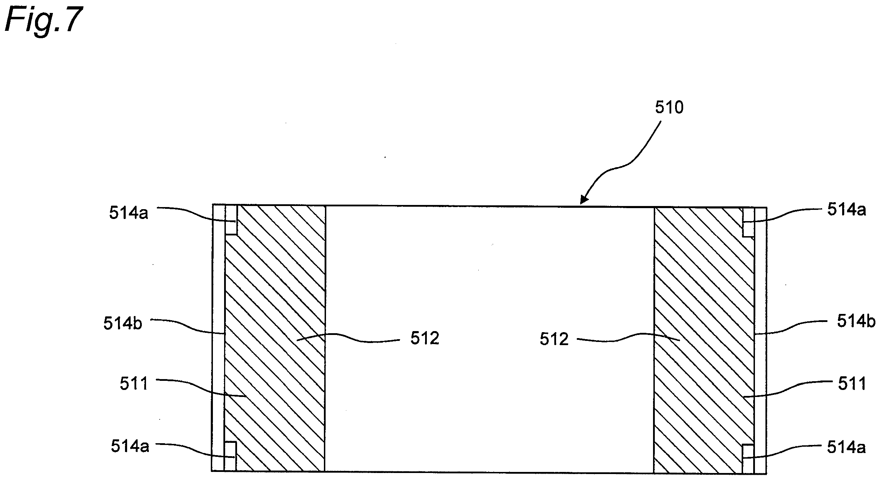

FIG. 7 is a longitudinal cross-sectional view of the stator core 510. In FIG. 7, the same components as those shown in FIG. 6A to FIG. 6C are denoted by the same reference signs.

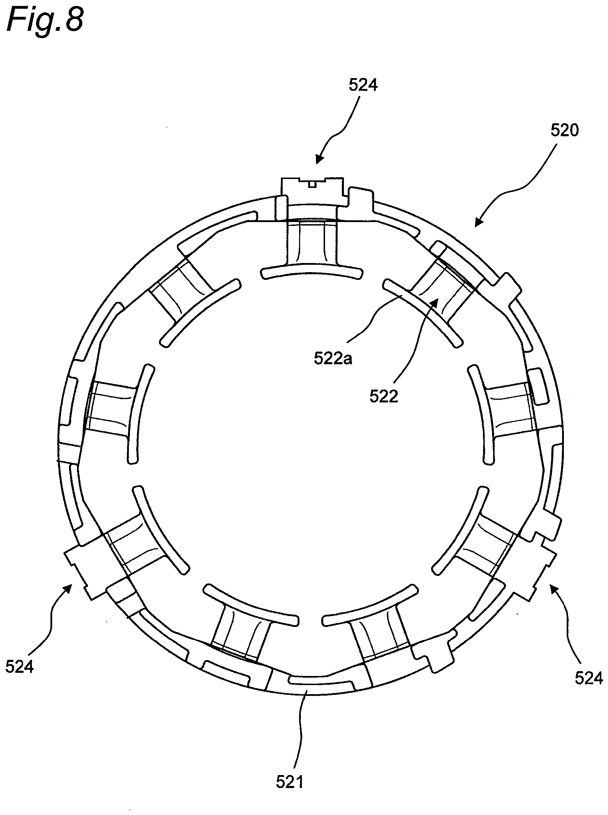

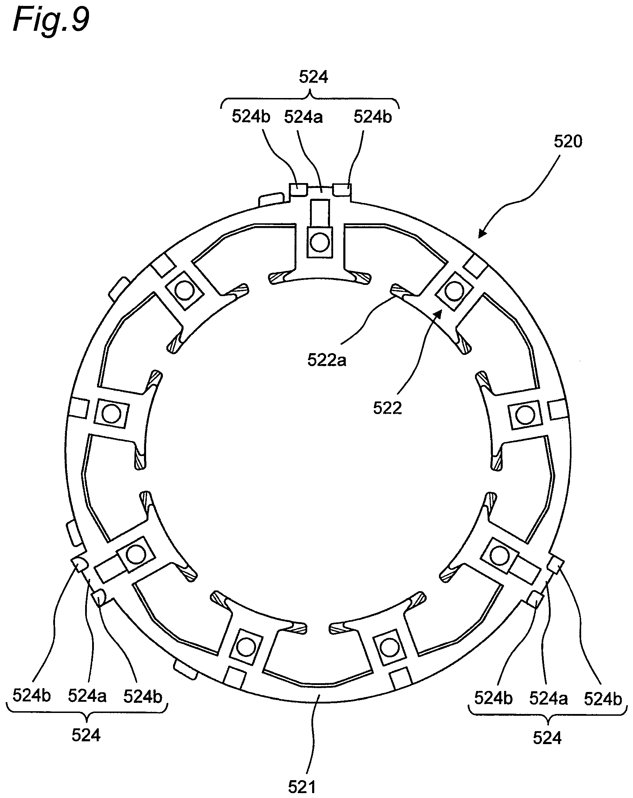

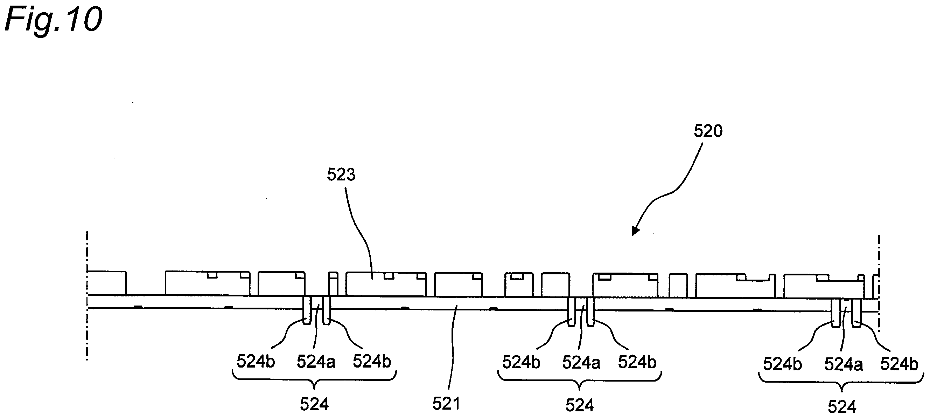

FIG. 8 is a top view of the upper insulator 520, FIG. 9 is a bottom view of the upper insulator 520, and FIG. 10 is a developed view of the upper insulator 520. In FIG. 8, FIG. 9, and FIG. 10, the same components as those shown in FIG. 4 and FIG. 5 are denoted by the same reference signs.

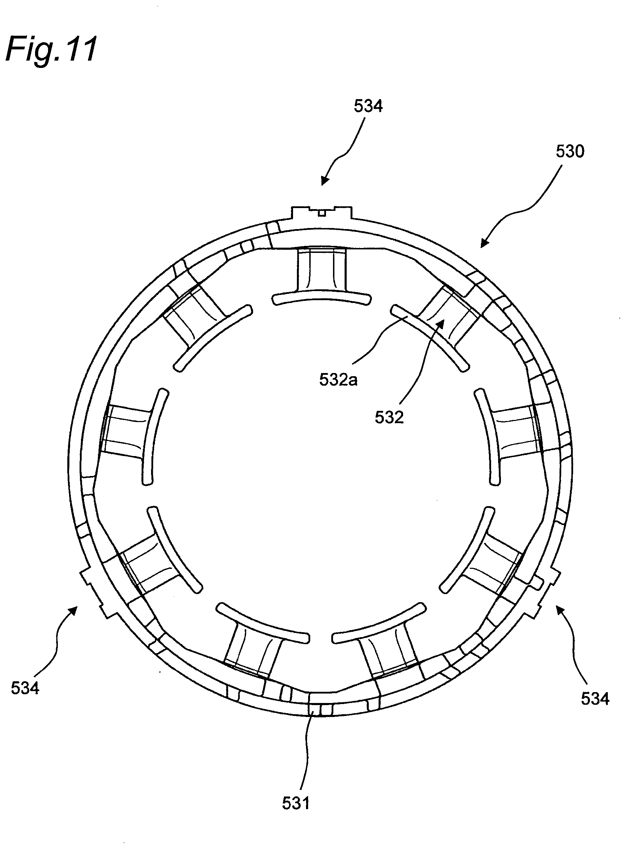

Furthermore, FIG. 11 is a bottom view of the lower insulator 530, FIG. 12 is a top view of the lower insulator 530, and FIG. 13 is a developed view of the lower insulator 530.

As shown in FIG. 11 and FIG. 12, the lower insulator 530 has an annular base 531, nine protrusions 532 protruding radially inward from an inner peripheral side of the annular base 531 and arranged at equal intervals (intervals of 40 degrees) in the circumferential direction, and a wall 533 erected in an approximately annular shape on a lower end surface in the axial direction of the annular base 531. Provided on a distal end side of each of the protrusions 532 is a flange 532a for preventing the coil from coming off.

Further, provided on an outer periphery of the annular base 531 of the lower insulator 530 are three fitting claws 534. Each of the fitting claws 534 has a raised portion 534a protruding radially outward from the outer periphery of the annular base 531, and the two projections 534b extending upward in the axial direction from a distal end side of the raised portion 534a and arranged at a predetermined interval in the circumferential direction.

In the stator 5 having the above-described structure, two fitting grooves 515 are provided extending in the axial direction on the outer peripheral side of the back yoke 511 and arranged away from, in the circumferential direction, the position of a crimp 513 that joins the laminated steel sheets of the back yoke 511 to put the position of the crimp 513 between the two fitting grooves 515, and two projections 524b, 534b provided on the outer peripheries of the upper insulator 520 and the lower insulator 530 are fitted into the two fitting grooves 515 of the back yoke 511. Accordingly, since no fitting groove is provided on an outer peripheral portion of the back yoke 511 on an radially outer side of the crimp 513, i.e., in alignment with the crimp 513 in the radial direction, and the crimp 513 is located between and distanced from the fitting grooves 515 in the circumferential direction, it is possible to maintain a thickness in the radial direction from the crimp 513 to the outer periphery of the stator core 510, which in turn makes a peripheral portion including the crimp 513 less prone to deformation and further makes the fitting grooves 515 less prone to deformation. Since the projections 524b, 534b of the upper insulator 520 and the lower insulator 530 are fitted into the fitting grooves 515 of the stator core 510 without being affected by possible deformation of the stator core 510 due to the crimps 513, stability of the upper insulator 520 and the lower insulator 530 fixed to the stator core 510 increases, which in turn makes the upper insulator 520 and the lower insulator 530 less prone to displacement or deformation due to, for example, winding tension during coil winding operation.

Further, the fitting grooves 515 on the outer periphery of the back yoke 511 are provided continuously extending along the axial direction between both end surfaces of the back yoke 511, and, of the fitting grooves 515, the first grooves 515a into which the projections 524b, 534b of the upper insulator 520 and the lower insulator 530 are fitted are greater in radial depth than the second grooves 515b. This forms, between the fitting grooves 515 continuously extending along the axial direction, the ridge-shaped raised portions 516 at which the laminated steel sheets are weldable together, as well as increasing strength of engagement of the projections 524b, 534b of the upper insulator 520 and the lower insulator 530 with the fitting grooves 515 on the outer peripheral side of the back yoke 511.

Further, providing a crimp 513 of the back yoke 511 on the center line L extending in the radial direction of a tooth 512 allows the crimp 513 to be disposed at a position on the outer peripheral side of the back yoke 511 that is less affected by magnetic flux. Then, the fitting grooves 515 are arranged away from, in the circumferential direction, the position of the crimp 513 to put the position of the crimp 513 between the fitting grooves 515, that is, the fitting grooves 515 are arranged at positions less affected by magnetic flux, which in turn suppresses deterioration in motor performance.

Further, each of the fitting grooves 515 is provided on the outer periphery of the back yoke 511 in an area where a core cut 511a of the back yoke 511 is formed, whereby, when the stator 5 is fixed into the hermetic container 1 by shrink fitting or the like, portions where the projections 524b, 534b of the upper insulator 520 and the lower insulator 530 are fitted into the fitting grooves 515 of the stator core 510 are prevented from receiving force from the inner peripheral surface of the hermetic container 1 and being deformed, which makes the upper insulator 520 and the lower insulator 530 fixed to the stator core 510 more stable.

Further, providing the fitting grooves 515 on the outer periphery of the back yoke 511 continuously extending in the axial direction between both end surfaces of the back yoke 511 to form the ridge-shaped raised portions 516 between the fitting grooves 515 on the outer periphery of the back yoke 511 and welding the laminated steel sheets at the ridge-shaped raised portions 516 result in an increase in rigidity of the laminated steel sheets of the stator core 510. This makes it possible to prevent, when the stator 5 is fixed into the hermetic container 1 by shrink fitting or the like, the stator core 510 from being deformed, suppress deterioration in flatness of both end surfaces of the stator core 510, and suppress deterioration in motor performance and reduce noise.

Further, the motor 3 having the above-described structure includes the stator 5 that can suppress displacement or deformation of the upper insulator 520 and the lower insulator 530 due to, for example, winding tension during coil winding operation, and the rotor 6 disposed radially inside of the stator 5, which makes it possible to suppress deterioration in motor performance and reduce noise.

Further, in the compressor having the above-described structure, the motor 3 is disposed in the hermetic container 1 and drives the compression mechanism part 2, which makes it possible to suppress deterioration in performance and reduce noise.

According to the first embodiment, the fitting grooves 515 are provided continuously extending on the stator core 510 in the axial direction; however, a structure where fitting grooves are provided extending in the axial direction on each of the upper end side and the lower end side of the outer peripheral surface of the stator core without the fitting grooves continuously extending between both end surfaces of the stator core may be employed.

Further, a description has been given, according to the first embodiment, of the stator 5 including the stator core 510 provided with the fitting grooves 515 including the first grooves 515a into which the projection 524b of the upper insulator 520 and the projection 534b of the lower insulator 530 are fitted and the second grooves 515b less in radial depth than the first grooves 515a; however, a structure where fitting grooves identical in radial depth are provided continuously extending in the axial direction between both end surfaces of the stator core may be employed.

Further, according to the first embodiment, the crimps 513 of the back yoke 511 are provided on the center lines L extending in the radial direction of the teeth 512; however, the position of the crimps is not limited to such a position, and at least two fitting grooves extending in the axial direction only need to be provided away from, in the circumferential direction, the position of a corresponding crimp so as to put the position of the crimp between the fitting grooves.

### [Second embodiment]

In the stator 5 according to the first embodiment, the three fitting claws 524, 534 (including the projections 524b, 534b) are arranged at intervals of 120 degrees in the circumferential direction on the outer periphery of the annular bases 521, 531 of the upper insulator 520 and the lower insulator 530. In contrast, in a stator according to a second embodiment of the present invention, at least four fitting claws (including projections) are arranged at equal intervals in the circumferential direction on the outer periphery of the annular bases of the upper insulator and the lower insulator.

In such a structure, the fitting grooves of the stator core are provided at positions where the projections of the fitting claws of the upper insulator and the lower insulator can be fitted.

The stator according to the second embodiment has the same effects as the stator 5 according to the first embodiment has.

### [Third embodiment]

A description has been given, according to the first embodiment, of the stator 5 having the stator core 510 in which the laminated steel sheets at the ridge-shaped raised portions 516 are welded together; however, a stator according to a third embodiment of the present invention has a structure where the laminated steel sheets at the ridge-shaped raised portions of the stator core are not welded.

The stator according to the third embodiment has the same effects as the stator 5 according to the first embodiment has, except for the effect of welding the laminated steel sheets at the ridge-shaped raised portions.

### [Fourth embodiment]

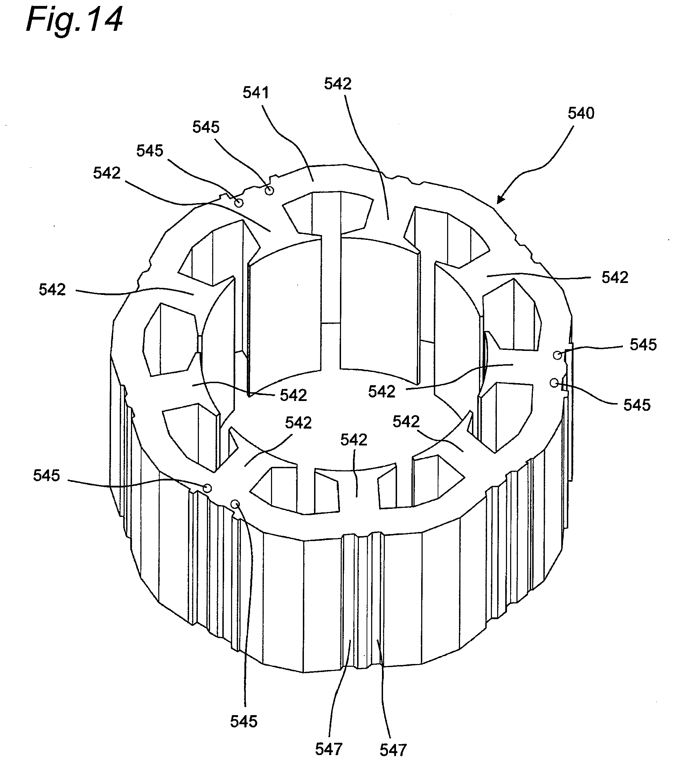

FIG. 14 is a perspective view of a stator core 540 of a stator according to a fourth embodiment of the present invention. The stator according to the fourth embodiment has the same structure as the stator of the motor 3 that drives the compressor according to the first embodiment has, except for the stator core 540, an upper insulator 550, and a lower insulator, and will be described with reference to FIG. 1. The stator according to the fourth embodiment is applicable to the motor 3 that drives the compression mechanism part 2 of the compressor according to the first embodiment.

The stator core 540 is made of a laminate of a plurality electrical steel sheets (laminated steel sheets) and is fitted into the hermetic container 1 (shown in FIG. 1) by shrink fitting or the like. As shown in FIG. 14, the stator core 540 has a back yoke 541 having an annular shape and nine teeth 542 protruding radially inward from an inner peripheral surface of the back yoke 541 and arranged at equal intervals (intervals of 40 degrees) in the circumferential direction. In FIG. 14, 545 denotes a fitting hole, and 547 denotes a groove.

Note that although the stator core 540 has a structure where the back yoke 541 having an annular shape and the nine teeth 542 are combined into a single body or one piece, a structure where the stator core having the back yoke 541 having an annular shape and the nine teeth 542 is divided into a plurality of pieces may be employed.

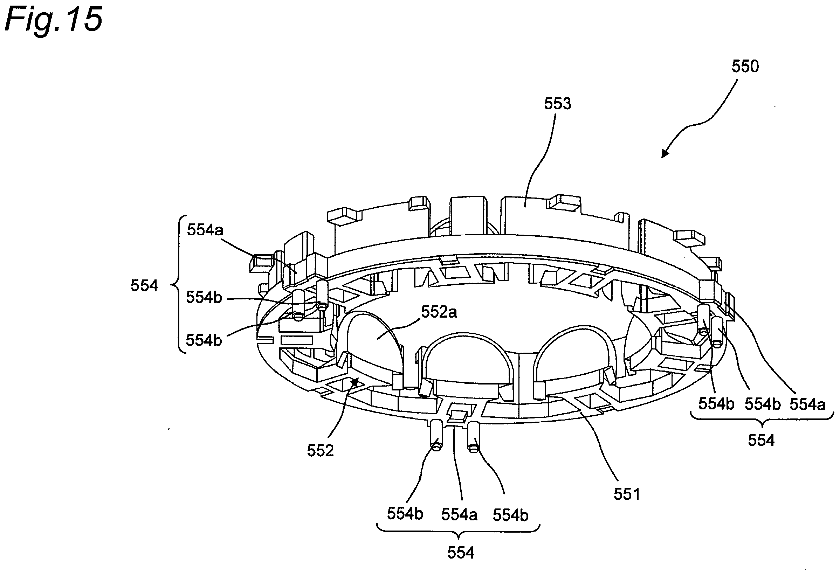

The stator according to the fourth embodiment has the stator core 540, the upper insulator 550 (shown in FIG. 15) mounted to an upper end surface in the axial direction of the stator core 540, the lower insulator (not shown) mounted to a lower end surface in the axial direction of the stator core 540, and a coil (not shown) wound around an assembly of the stator core 540, the upper insulator 550, and the lower insulator.

FIG. 15 is a perspective view of the upper insulator 550 as viewed from below.

As shown in FIG. 15, the upper insulator 550 has an annular base 551, nine protrusions 552 protruding radially inward from an inner peripheral side of the annular base 551 and arranged at equal intervals (intervals of 40 degrees) in the circumferential direction, and a wall 553 erected in an approximately annular shape on an upper end surface in the axial direction of the annular base 551. Provided on a distal end side of each of the protrusions 552 is a flange 552a for preventing the coil from coming off.

Further, provided on an outer periphery of the annular base 551 of the upper insulator 550 are three fitting claws 554. Each of the fitting claws 554 has a raised portion 554a protruding radially outward from the outer periphery of the annular base 551, and two columnar projections 554b extending downward in the axial direction from a distal end side of the raised portion 554a and arranged at a predetermined interval in the circumferential direction. Note that the shape of the projections 554b is not limited to the columnar shape, and may be a quadrangular prism or the like having a different cross-sectional shape.

Note that the lower insulator according to the fourth embodiment has the same structure as the lower insulator 530 according to the first embodiment, except for the fitting claws 554; therefore, the lower insulator is not shown in the drawings.

The lower insulator has fitting claws similar to the three fitting claws 554 provided on the outer periphery of the annular base 551 of the upper insulator 550. Each of the fitting claws has a raised portion protruding radially outward from the outer periphery of the annular base, and two projections extending upward in the axial direction from a distal end side of the raised portion and arranged at a predetermined interval in the circumferential direction.

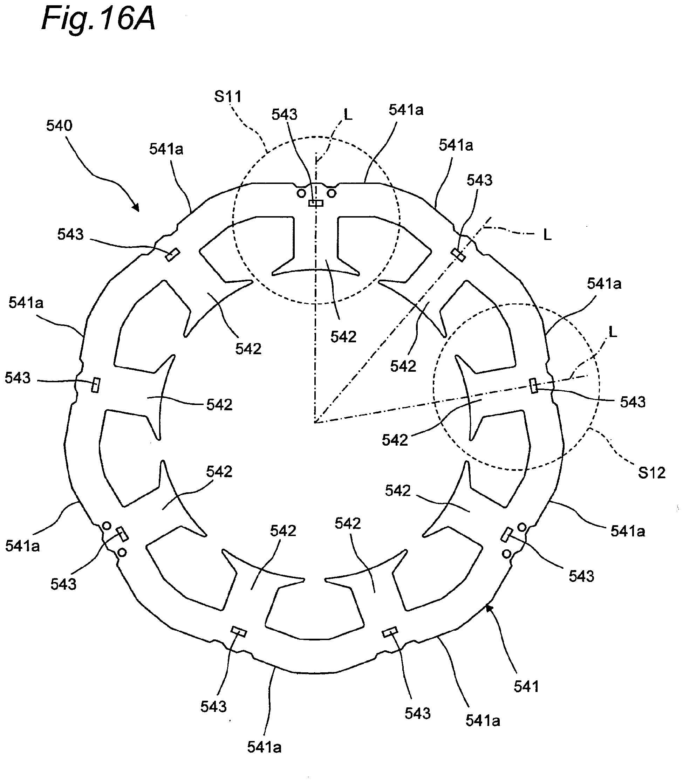

FIG. 16A is a top view of the stator core 540.

As shown in FIG. 16A, the stator core 540 has core cuts 541a provided in nine areas corresponding to the teeth 542 on the outer peripheral surface of the back yoke 541. The core cuts 541a of the stator core 540 do not come into contact with the inner peripheral surface of the hermetic container 1 (shown in FIG. 1).

Provided on the outer peripheral side of the back yoke 541 having an annular shape of the stator core 540 and on the center lines L extending in the radial direction of each of the teeth 542 are crimps 543 that fasten the plurality of electrical steel sheets of the stator core 540 together.

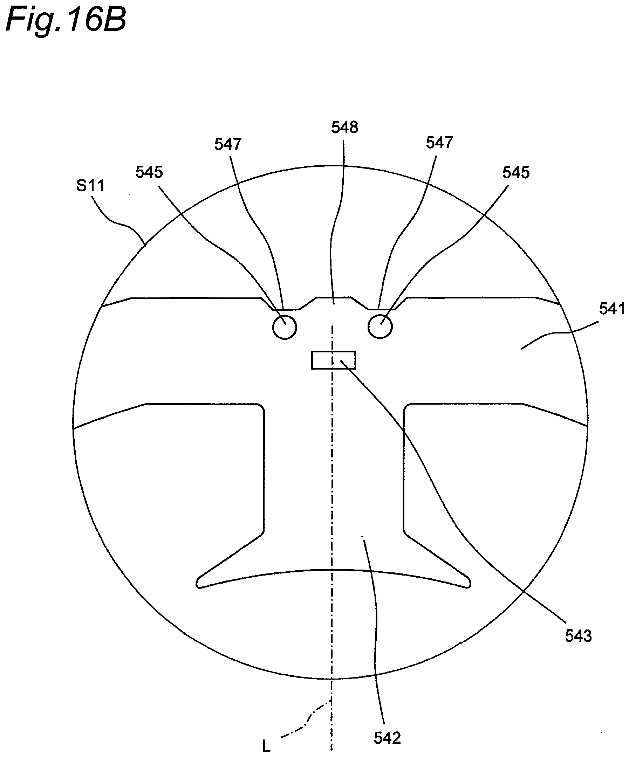

FIG. 16B is an enlarged top view of a part (area S11 shown in FIG. 16A) of the stator core 540.

Provided on the outer periphery of the back yoke 541 are two grooves 547 extending in the axial direction and arranged away from, in the circumferential direction, a position of the crimp 543 on the center line L extending in the radial direction of each tooth 542 to put the position of the crimp 543 between the two grooves 547 (see FIG. 14).

Provided on the outer peripheral side of the back yoke 541 are two fitting holes 545 extending in the axial direction and arranged away from, in the circumferential direction, the position of the crimp 543 on the center line L, extending in the radial direction, of each tooth 542 in such a manner as to put the position of the crimp 543 between the two fitting holes 545. The fitting holes 545 are circular holes into which the projections 554b of the upper insulator 550 can be fitted. Note that the shape of the fitting holes 545 may be any hole shape corresponding to the shape of the projections 554b of the upper insulator 550.

The two fitting holes 545 are provided continuously extending along the axial direction between both end surfaces of the back yoke 541. That is, the fitting holes 545 pass through the back yoke 541 in the axial direction. Further, the fitting holes 545 on the upper end side of the back yoke 541 each serve as a portion into which a corresponding one of the projections 554b (shown in FIG. 15) of the upper insulator 550 is fitted, and the fitting holes 545 on the lower end side of the back yoke 541 each serve as a portion into which a corresponding one of the projections of the lower insulator (not shown) is fitted.

In the area S11 of the stator core 540, the two projections 554b of the upper insulator 550 are fitted into the two fitting holes 545 of the back yoke 541 (on the upper end side of the back yoke 541). Further, the two projections of the lower insulator are fitted into the two fitting holes 545 (on the lower end side of the back yoke 541). Three sets of the two fitting holes 545 are arranged in the stator core 540 at intervals of 120 degrees in the circumferential direction.

Further, since the fitting holes 545 on the outer peripheral side of the back yoke 541 of the stator core 540 are provided continuously extending in the axial direction between both end surfaces of the back yoke 541, ridge-shaped raised portions 548 each are formed extending in the axial direction between two fitting holes 545 on the outer peripheral side of the back yoke 541. The laminated steel sheets of the ridge-shaped raised portions 548 of the stator core 540 are welded.

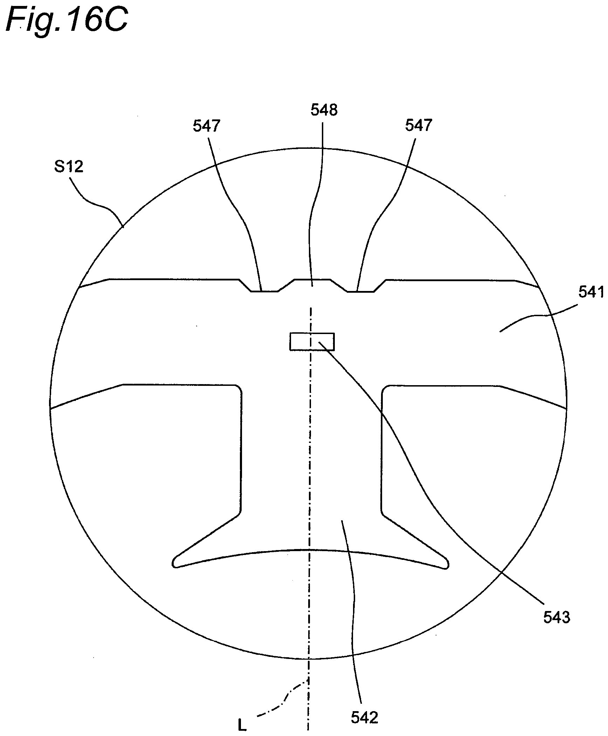

FIG. 16C is an enlarged top view of a part (area S12 shown in FIG. 16A) of the stator core 540.

Provided on the outer periphery of the back yoke 541 are two grooves 547 extending along the axial direction and arranged away from, in the circumferential direction, a position of the crimp 543 on the center line L, extending in the radial direction, of each tooth 542 in such a manner as to put the position of the crimp 543 between the two grooves 547 (see FIG. 14).

The areas S12 of the stator core 540 are, as shown in FIG. 16A, arranged at intervals of 40 degrees in the circumferential direction between the areas S11 of the stator core 540.

Further, as shown in FIG. 16C, since the grooves 547 on the outer periphery of the back yoke 541 are provided continuously extending in the axial direction between both end surfaces of the back yoke 541, the ridge-shaped raised portions 548 each are formed extending in the axial direction between two grooves 547 on the outer periphery of the back yoke 541. The grooves 547 are approximately identical in radial depth to a second hole 545b of the fitting holes 545. The laminated steel sheets at the ridge-shaped raised portions 548 of the stator core 540 are welded.

The stator according to the fourth embodiment has the same effects as the stator according to the first embodiment has.

Further, a motor including the stator makes it possible to suppress deterioration in motor performance and reduce noise.

Further, a compressor including the motor makes it possible to suppress deterioration in performance and reduce noise.

According to the fourth embodiment, the fitting holes 545 are provided continuously extending in the axial direction through the stator core 540; however, a structure where the fitting holes are provided extending in the axial direction in each of the upper end side and the lower end side of the outer peripheral surface of the stator core without fitting holes continuously extending between both end surfaces of the stator core may be employed.

Further, according to the fourth embodiment, the crimps 543 of the back yoke 541 are provided on the center lines L extending in the radial direction of the teeth 542; however, the position of the crimps is not limited to such a position, and at least two fitting holes extending in the axial direction only need to be provided away from, in the circumferential direction, the position of a corresponding crimp so as to put the position of the crimp between the fitting holes.

Further, according to the fourth embodiment, the ridge-shaped raised portions 548 are formed, on the outer periphery of the back yoke 541, between the grooves 547 provided continuously extending in the axial direction between both end surfaces of the back yoke 541, and then the laminated steel sheets at the ridge-shaped raised portions 548 are welded together; however, when the rigidity of the stator core is sufficiently high, the grooves for forming the ridge-shaped raised portions at which the laminated steel sheets are to be welded together need not be provided on the outer periphery of the back yoke 541.

### [Fifth embodiment]

In the stator according to the fourth embodiment, the three fitting claws 554 (including the projections 554b) are arranged at intervals of 120 degrees in the circumferential direction on the outer periphery of the annular base 551 of the upper insulator 550 and on the outer periphery of the annular base of the lower insulator. In contrast, in a stator according to a fifth embodiment of the present invention, at least four fitting claws (including projections) are arranged at equal intervals in the circumferential direction on the outer periphery of the annular bases of the upper insulator and the lower insulator.

In such a structure, the fitting holes of the stator core 540 are provided at positions where the projections of the fitting claws of the upper insulator 550 and the lower insulator can be fitted into the fitting holes.

The stator according to the fifth embodiment has the same effects as the stator according to the fourth embodiment has.

### [Sixth embodiment]

A description has been given according to the fourth embodiment of the stator having the stator core 540 in which the laminated steel sheets at the ridge-shaped raised portions 548 are welded together; however, a stator according to a sixth embodiment of the present invention has a structure where the laminated steel sheets at the ridge-shaped raised portions of the stator core are not welded.

The stator according to the sixth embodiment has the same effects as the stator according to the fourth embodiment has, except for the effect of welding the laminated steel sheets at the ridge-shaped raised portions together.

A description has been given according to the first to sixth embodiments of the compressor including the motor 3; however, the motor according to the present invention may be applicable to not only a compressor but also any apparatus using a motor.

Further, a description has been given, according to the first to sixth embodiments, of the vertical rotary compressor; however, the present invention may be applicable to not only such a vertical rotary compressor but also a horizontal compressor, a scroll compressor, and the like.

The foregoing description concerns specific embodiments of the present invention; however, the present invention is not limited to the first to sixth embodiments, and various modifications and variations may be made within the scope of the present invention. The scope of the invention is defined by the appended claims.

### REFERENCE SIGNS LIST

- 1: hermetic container
- 2: compression mechanism part
- 3: motor
- 5: stator
- 6: rotor
- 9: oil sump
- 10: accumulator
- 11: suction pipe
- 12: shaft
- 13: discharge pipe
- 21: cylinder
- 22: cylinder chamber
- 26: eccentric pin
- 27: roller
- 31: discharge valve
- 35: bolt
- 40: muffler cover
- 42: muffler chamber
- 43: hole
- 50: end plate member
- 51: main body
- 51a: discharge port
- 52: boss
- 60: end plate member
- 61: main body
- 62: boss
- 510, 540: stator core
- 511, 541: back yoke
- 512,542: tooth
- 513, 543: crimp
- 514: slot
- 515: fitting groove
- 515a: first groove
- 515b: second groove
- 516: ridge-shaped raised portion
- 517,547: groove
- 518, 548: ridge-shaped raised portion
- 520, 550: upper insulator
- 521,551: annular base
- 522: protrusion
- 522a: flange
- 523, 553: wall
- 524, 554: fitting claw
- 524a, 554a: raised portion
- 524b, 554b: projection
- 530: lower insulator
- 531: annular base
- 532: protrusion
- 532a: flange
- 533: wall
- 534: fitting claw
- 534a: raised portion
- 534b: projection
- 545: fitting hole

## Claims

1. A stator (5) comprising:
a stator core (510; 540) including a back yoke (511; 541) having an annular shape and a plurality of teeth (512; 542) protruding radially inward of the back yoke (511;541) and arranged at intervals in a circumferential direction; and
insulators (520, 530; 550) between which the stator core (510; 540) is sandwiched from both sides in an axial direction, wherein
at least three fitting claws (524, 534; 554) are provided at positions each corresponding to a different one of the stator teeth, on an outer periphery of each of the insulators (520, 530; 550), each of the fitting claws having two projections (524b, 534b; 554b) being fitted into two fitting grooves (515, 515a) or two fitting holes (545) of the back yoke (511; 541), said two fitting grooves (515, 515a) being provided on an outer peripheral side of the back yoke (511; 541), said two fitting holes (545) being provided on an axial end of the back yoke (541), said two fitting grooves (515, 515a) or two fitting holes (545) extending along the axial direction and being arranged away from, in the circumferential direction, a position of a crimp (513; 543) that joins laminated steel sheets of the back yoke (511; 541), so as to put the position of the crimp (513; 543) circumferentially between the two fitting grooves (515, 515a) or two fitting holes (545) corresponding to the same one of the at least three fitting claws (524, 534, 554).

2. The stator (5) according to claim 1, wherein
the fitting grooves (515) on the outer peripheral side of the back yoke (511) are provided continuously extending along the axial direction between both end surfaces of the back yoke (511), and
a portion (515a) of each of the fitting grooves (515) into which a corresponding one of the projections (524b, 534b) of the insulators (520, 530) is fitted is greater in radial depth than other portions (515b) of the fitting grooves (515).

3. The stator (5) according to claim 1 or 2, wherein
the crimp (513; 543) of the back yoke (511; 541) is located on a center line (L). extending in a radial direction. of a tooth (512; 542).

4. The stator (5) according to any one of claims 1 to 3, wherein
the fitting grooves (515) on the outer peripheral side of the back yoke (511) are each provided in an area where a core cut (511a) of the back yoke (511) is formed.

5. The stator (5) according to any one of claims 1 to 4, wherein
the fitting grooves (515) on the outer peripheral side of the back yoke (511) are provided continuously extending along the axial direction between both the end surfaces of the back yoke (511) to form a ridge-shaped raised portion (516) between the fitting grooves (515) on the outer peripheral side of the back yoke (511), the laminated steel sheets at the ridge-shaped raised portion (516) being welded together.

6. A motor (3) comprising:
the stator (5) according to any one of claims 1 to 5; and
a rotor (6) disposed radially inside of the stator (5).

7. A compressor comprising:
a hermetic container (1);
a compression mechanism part (2) disposed in the hermetic container (1); and
the motor (3) according to claim 6, the motor (3) being disposed in the hermetic container (1) and configured to drive the compression mechanism part (2).

## Patentansprüche

1. Stator (5), umfassend:
einen Statorkern (510; 540) mit einem hinteren Joch (511; 541), das eine ringförmige Form aufweist, und einer Vielzahl von Zähnen (512; 542), die von dem hinteren Joch (511; 541) radial nach innen vorstehen und in einer Umfangsrichtung in Abständen angeordnet sind; und
Isolatoren (520, 530; 550), zwischen denen der Statorkern (510; 540) von beiden Seiten in einer axialen Richtung eingeschlossen ist, wobei
mindestens drei Montageklauen (524, 534; 554) an Positionen, wobei jede einem anderen der Statorzähne entspricht, an einem Außenumfang jedes der Isolatoren (520, 530; 550) vorgesehen sind, wobei jede der Montageklauen zwei Vorsprünge (524b, 534b; 554b) aufweist, die in zwei Montagenuten (515, 515a) oder zwei Montagelöcher (545) des hinteren Jochs (511; 541) eingepasst sind, wobei die zwei Montagenuten (515, 515a) an einer Außenumfangsseite des hinteren Jochs (511; 541) vorgesehen sind, wobei die zwei Montagelöcher (545) an einem axialen Ende des hinteren Jochs (541) vorgesehen sind, wobei sich die zwei Montagenuten (515, 515a) oder die zwei Montagelöcher (545) entlang der axialen Richtung erstrecken und in der Umfangsrichtung von einer Position einer Bördelung (513; 543), die laminierte Stahlbleche des hinteren Jochs (511; 541) verbindet, weg angeordnet sind, um die Position der Bördelung (513; 543) in Umfangsrichtung zwischen die zwei Montagenuten (515, 515a) oder zwei Montagelöcher (545) zu legen.

2. Stator (5) nach Anspruch 1, wobei
die Montagenuten (515) auf der äußeren Umfangsseite des hinteren Jochs (511) durchgehend entlang der axialen Richtung zwischen beiden Endflächen des hinteren Jochs (511) verlaufen, und
ein Abschnitt (515a) jeder der Montagenuten (515), in den ein entsprechender der Vorsprünge (524b, 534b) der Isolatoren (520, 530) eingepasst ist, eine größere radiale Tiefe aufweist als andere Abschnitte (515b) der Montagenuten (515).

3. Stator (5) nach Anspruch 1 oder 2, wobei
die Bördelung (513; 543) des hinteren Jochs (511; 541) auf einer Mittellinie (L) angeordnet ist, die sich in radialer Richtung eines Zahns (512; 542) erstreckt.

4. Stator (5) nach einem der Ansprüche 1 bis 3, wobei
die Montagenuten (515) an der äußeren Umfangsseite des hinteren Jochs (511) jeweils in einem Bereich vorgesehen sind, in dem ein Kernschnitt (511a) des hinteren Jochs (511) ausgebildet ist.

5. Stator (5) nach einem der Ansprüche 1 bis 4, wobei
die Montagenuten (515) an der äußeren Umfangsseite des hinteren Jochs (511) kontinuierlich entlang der axialen Richtung zwischen den beiden Endflächen des hinteren Jochs (511) verlaufen, um einen rippenförmigen erhöhten Abschnitt (516) zwischen den Montagenuten (515) an der äußeren Umfangsseite des hinteren Jochs (511) zu bilden, wobei die laminierten Stahlbleche an dem rippenförmigen erhöhten Abschnitt (516) miteinander verschweißt sind.

6. Motor (3), umfassend:
den Stator (5) nach einem der Ansprüche 1 bis 5; und
einen Rotor (6), der radial innerhalb des Stators (5) angeordnet ist.

7. Verdichter, der Folgendes umfasst:
einen hermetischen Behälter (1);
einen Verdichtungsmechanismus-Teil (2), der in dem hermetischen Behälter (1) angeordnet ist; und
den Motor (3) nach Anspruch 6, wobei der Motor (3) in dem hermetischen Behälter (1) angeordnet und so konfiguriert ist, dass er den Verdichtungsmechanismus-Teil (2) antreibt.

## Revendications

1. Stator (5) comprenant :
un noyau de stator (510, 540) comprenant une culasse arrière (511, 541) de forme annulaire, et une pluralité de dents (512, 542) faisant saillie radialement vers l'intérieur de la culasse arrière (511, 541), et agencées à certains intervalles dans une direction circonférentielle ; et
des isolateurs (520, 530, 550) entre lesquels est intercalé le noyau de stator (510, 540) de deux côtés dans une direction axiale,
au moins trois griffes de fixation (524, 534, 554) étant montées, dans des positions correspondant chacune à une dent distincte des dents du stator, sur un pourtour extérieur de chacun des isolateurs (520, 530, 550), chacune des griffes de fixation possédant deux saillies (524b, 534b, 554b) montées dans deux rainures de fixation (515, 515a) ou deux orifices de fixation (545) de la culasse arrière (511, 541), lesdites deux rainures de fixation (515, 515a) étant agencés sur un côté périphérique extérieur de la culasse arrière (511, 541), lesdits deux orifices de fixation (545) étant placés sur une extrémité axiale de la culasse arrière (541), lesdites deux rainures de fixation (515, 515a) ou lesdits deux orifices de fixation (545) s'étendant le long de la direction axiale et étant agencés, dans le sens circonférentiel, dans la direction opposée à une position d'un sertissage (513, 543) joignant des tôles d'acier stratifiées de la culasse arrière (511, 541), de façon à placer la position du sertissage (513, 543) de façon circonférentielle entre les deux rainures de fixation (515, 515a) ou deux orifices de fixation (545) correspondant à la même desdites au moins trois griffes de fixation (524, 534, 554).

2. Stator (5) selon la revendication 1,
les rainures de fixation (515) sur le côté périphérique extérieur de la culasse arrière (511) étant placées en s'étendant en continu le long de la direction axiale entre les deux surfaces d'extrémité de la culasse arrière (511), et
la profondeur radiale d'une partie (515a) de chacune des rainures de fixation (515), dans laquelle une saillie correspondante des saillies (524b, 534b) des isolateurs (520, 530) est montée, étant supérieure à celle d'autres parties (515b) des rainures de fixation (515).

3. Stator (5) selon la revendication 1 ou 2,
le sertissage (513, 543) de la culasse arrière (511, 541) étant situé sur un axe (L) s'étendant dans une direction radiale d'une dent (512, 542).

4. Stator (5) selon une quelconque des revendications 1 à 3,
les rainures de fixation (515) sur le côté périphérique extérieur de la culasse arrière (511) étant agencées chacune dans une zone où est formé un noyau découpé (511a) de la culasse arrière (511).

5. Stator (5) selon une quelconque des revendications 1 à 4,
les rainures de fixation (515) sur le côté périphérique extérieur de la culasse arrière (511) étant agencées en continu le long de la direction axiale entre les deux surfaces d'extrémité de la culasse arrière (511), en formant une partie surélevée en forme de crête (516) entre les rainures de fixation (515) sur le côté périphérique extérieur de la culasse arrière (511), les tôles d'acier stratifiées sur la partie surélevée en forme de crête (516) étant soudées ensemble.

6. Moteur (3) comprenant :
le stator (5) selon une quelconque des revendications 1 à 5 ; et
un rotor (6) disposé radialement à l'intérieur du stator (5).

7. Compresseur comprenant :
un conteneur hermétique (1) ;
un élément de mécanisme de compression (2) disposé dans le conteneur hermétique (1) ; et
le moteur (3) selon la revendication 6, le moteur (3) étant disposé dans le conteneur hermétique (1) et configuré pour entraîner l'élément de mécanisme de compression (2).
